# FASCICULE DE BREVET EUROPEEN

(11) **EP 1 112 653 B1**
(45) Date de publication et mention de la délivrance du brevet: **19.06.2002**
(21) Numéro de dépôt: 99941694.4
(22) Date de dépôt: 03.09.1999
(51) Int. Cl.: H04N 5/225, G03B 19/20

(54) **CAMERA CINEVIDEO**
KINEVIDEOKAMERA
VIDEO CAMERA

(30) Priorité: 08.09.1998 FR 9811199
(43) Date de publication de la demande: 04.07.2001
(73) Titulaire: Thales, 75008 Paris (FR)
(72) Inventeur: DEFAY, Patrick, Thomson-CSF Prop. Int. Dept. Brev, 94117 Arcueil Cedex (FR)
(74) Mandataire: Vigand, Régis Louis Michel
(86) Numéro de dépôt international: FR9902111
(87) Numéro de publication internationale: WO0014956

(56) Documents cités:
- DE-U- 9 013 698
- GB-A- 2 175 172
- US-A- 4 504 866
- US-A- 4 797 734
- US-A- 4 812 911

## Description

L'invention concerne le domaine des caméras.

Le brevet américain US 4797734 décrit une caméra comportant un obturateur avec un temps d'exposition permettant de photographier des objets très rapides.

Pour obtenir une prise de vue la meilleure possible. Il est important pour l'utilisateur de bien cadrer son image tout ou long de la prise de vue.

Le modèle d'utilité allemand DE U 90 13698 décrit une caméra comportant trois voies optiques : une voie film, une voie viseur et une voie capteur à effet photoélectrique, la lumière étant répartie entre les différentes voies optiques par l'intermédiaire d'un obturateur réfléchissant et d'une lame semi-réfléchissante.

Selon l'art antérieur, il existe des caméras vidéo possédant un viseur électronique situé en aval des capteurs effet photoélectrique. Or, ces capteurs ont habituellement un champ qui se confond avec le champ utile enregistré dans la caméra. L'accès à une vision hors du champ de ces capteurs est alors impossible. Cette vision hors champ permettrait à l'utilisateur d'anticiper les obstacles avant qu'ils n'apparaissent dans le champ utile de la scène observée.

Pour cela, l'invention utilise un viseur de nature optique qui est placé dans la partie de la caméra qui est située en amont des capteurs.

Selon l'invention, il est prévu une caméra selon la revendication 1.

Selon une réalisation préférentielle de l'invention, il est prévu un obturateur qui comporte un élément rotatif comportant au moins une partie miroir correspondant à sa position fermée et au moins une partie trou correspondant à sa position ouverte.

L'invention sera mieux comprise et d'autres caractéristiques et avantages apparaîtront à l'aide de la description ci-après et des dessins joints, donnés à titre d'exemples non limitatifs, où
- la figure 1 représente schématiquement l'architecture d'une caméra selon l'invention.
- la figure 2 représente schématiquement un mode de réalisation d'un obturateur selon l'invention selon le plan de coupe AA de la figure 1.
- la figure 3 représente schématiquement un autre mode de réalisation d'un obturateur selon l'invention selon le plan de coupe AA de la figure 1.

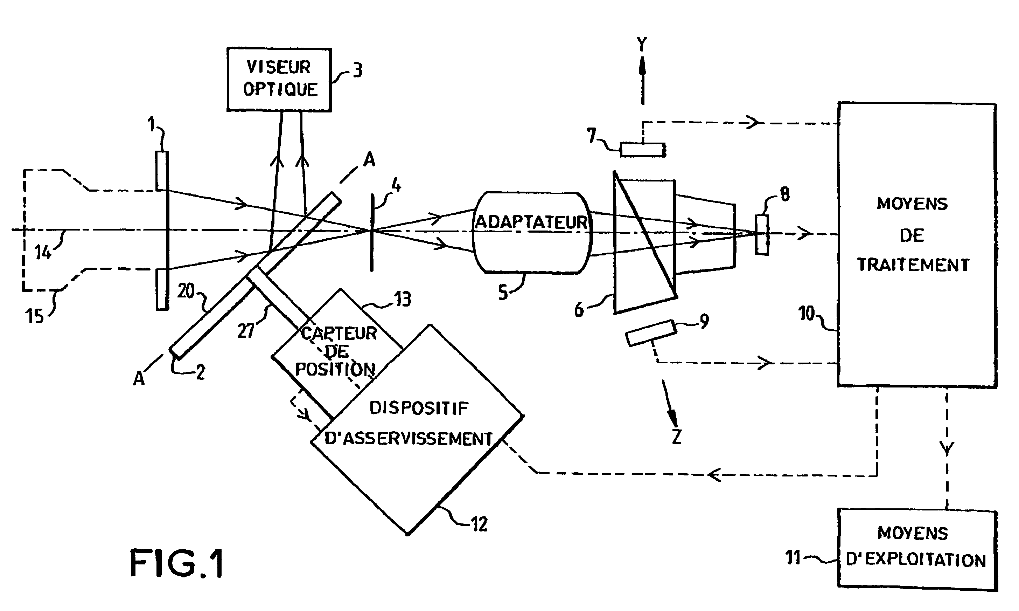

La figure 1 représente schématiquement l'architecture d'une caméra selon l'invention.

La caméra a un axe optique 14 qui est représenté en traits mixtes. Le trajet des rayons lumineux est représenté à l'aide de flèches en traits pleins, le sens des flèches indiquant le sens de propagation des rayons.

La caméra comporte un support objectif 1 destiné à recevoir un objectif 15 représenté en traits pointillés. En aval du support objectif 1, se situe un plan focal objectif 4 qui correspond au plan focal de l'objectif 15 qui sera utilisé avec la caméra. Ce plan focal objectif 4 est commun pour les différentes composantes spectrales de la lumière issue de la scène observée. La caméra est de préférence conçue pour être utilisée avec une gamme de plusieurs objectifs ayant le même tirage, c'est-à-dire la distance d entre le support objectif 1 et le plan focal objectif 4, qui reste alors la même pour tous les objectifs de cette gamme. Ces objectifs correspondront préférentiellement à un même format, par exemple le format « Super 16mm ». Ces objectifs pourraient aussi correspondre à d'autres formats, tels que par exemple le format « 35 mm ».

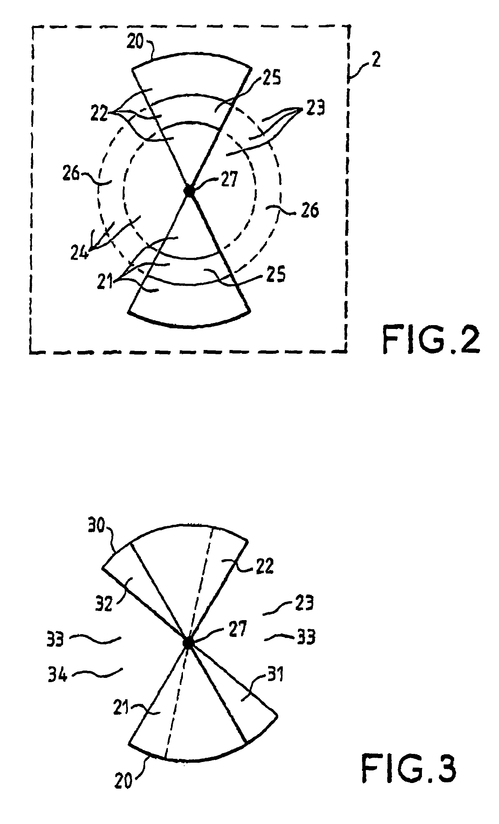

Entre le support objectif 1 et le plan focal objectif 4, se situe un obturateur 2. En position ouverte, l'obturateur 2 laisse passer en direction du plan focal objectif 4 la lumière arrivant de la scène observée par l'intermédiaire d'un objectif 15 monté sur la caméra. En position fermée, l'obturateur 2 est réfléchissant, il réfléchit cette même lumière en l'orientant en direction d'un viseur optique 3. De préférence, la caméra comporte au moins un mode dans lequel la commutation entre les positions ouverte et fermée est périodique, la période de commutation étant inférieure à la durée de la persistance rétinienne. Plus cette période de commutation est inférieure à la durée de la persistance rétinienne, meilleur est le confort visuel de l'utilisateur au niveau du viseur optique 3. L'obturateur 2 comporte de préférence un élément rotatif 20 comportant au moins une partie miroir correspondant à sa position fermée et au moins une partie trou correspondant à sa position ouverte. L'élément rotatif 20 est avantageusement monté sur un axe de rotation 27 comme sur la figure 1. L'obturateur 2 sera décrit plus en détail ultérieurement à I'aide des figures 2 et 3.

Le viseur optique 3 est situé hors de l'axe optique 14, il ne reçoit donc la lumière de la scène observée que lorsque cette lumière est réfléchie par l'obturateur 2 lorsque ce dernier est en position fermée. Le viseur optique 3 est de préférence dans une direction orthogonale à l'axe optique 14, ce qui amène alors l'obturateur 2 à être orienté à un angle de 45° par rapport à l'axe optique 14 comme sur la figure 1. Le viseur optique 3 est un viseur qui permet une vision hors du champ des capteurs, c'est-à-dire qu'il permet une vision sur un champ vaste comprenant le champ utile qui sera la portion d'image de la scène observée reçue par les capteurs ainsi qu'une partie de l'espace entourant ce champ utile.

En aval du plan focal objectif 4, se situe un séparateur spectral 6. Le séparateur spectral 6 décompose la lumière reçue de la scène observée en trois composantes lumineuses qui peuvent être par exemple le rouge, le vert et le bleu. Ce séparateur spectral 6 comporte de préférence plusieurs prismes accolés avec des traitements dichroïques aux interfaces permettant de séparer géométriquement les composantes lumineuses. A ce séparateur spectral 6 sont associés trois capteurs 7, 8 et 9. Chacune des trois composantes lumineuses suit un trajet géométrique différent lors de la traversée du séparateur spectral 6 pour aboutir à l'un des trois capteurs 7 à 9. Pour des raisons de clarté, seuls les rayons lumineux se focalisant sur le capteur 8 sont représentés. Les chemins optiques suivis par les trois composantes lumineuses, entre l'entrée du séparateur spectral 6 et les plans focaux des capteurs 7 à 9 sont également différents. Les trois composantes lumineuses sont respectivement focalisées sur les capteurs 7 à 9. Par exemple dans le cas préférentiel d'une décomposition en rouge, en vert et en bleu, la composante rouge est focalisée sur le capteur 7, la composante verte sur le capteur 8, et la composante bleue sur le capteur 9.

Un adaptateur 5, situé entre le plan focal objectif 4 et le séparateur spectral 6, réalise l'adaptation entre le plan focal objectif 4 qui est commun à toutes les composantes lumineuses et les différents plans focaux de ces capteurs, en tenant notamment compte des corrections optiques destinées à compenser les aberrations dues à la traversée du séparateur spectral 6. De préférence, la géométrie du séparateur spectral 6 est telle que chaque capteur est situé sur un axe différent d'un repère qui aurait son origine à l'intérieur du séparateur spectral 6. Par exemple sur la figure 1, en notant axe X l'axe optique 14, le capteur 8 se trouve sur l'axe X, c'est-à-dire dans le prolongement de l'axe optique 14, les capteur 7 et 9 se trouvent respectivement sur les axes Y et Z qui sont deux axes approximativement situés dans un plan orthogonal à l'axe optique 14 comme sur la figure 1.

Les capteurs 7 à 9 sont des capteurs à effet photoélectrique qui transforment en signaux électriques les composantes lumineuses reçues dans leur plan focal. Ces capteurs sont avantageusement matriciels, c'est-à-dire qu'ils se composent d'un grand nombre de détecteurs élémentaires dont l'ensemble permet de couvrir le champ utile de la scène observée. Ces signaux électriques sont ensuite acheminés vers des moyens 10 électroniques de traitement par l'intermédiaire de liaisons électriques. Sur la figure 1, les liaisons électriques sont représentées à I'aide de flèches en traits pointillés, le sens de la flèche indiquant le sens de circulation de l'information véhiculée par ces signaux électriques. Les moyens 10 de traitement traitent cette information avant de la transmettre à des moyens 11 d'exploitation, lesquels peuvent être, par exemple, soit des moyens d'enregistrement soit des moyens de visualisation comme un écran de visualisation de la synthèse des trois composantes lumineuses après leur passage dans les moyens 10 de traitement. Les moyens 10 de traitement lisent les informations issues des capteurs 7 à 9. Cette lecture est de préférence périodique. Généralement, la période de lecture restera inférieure à la période de commutation de l'obturateur 2 pour que les capteurs 7 à 9 éclairés lors d'une position ouverte de l'obturateur 2 soient lus avant d'être à nouveau éclairés lors de la position ouverte suivante de l'obturateur 2. Une position ouverte et une position fermée successives constituent un cycle d'obturation.

L'obturateur 2 est commandé par un dispositif 12 d'asservissement à une vitesse de rotation VR donnée par exemple. L'axe 27 de rotation se prolonge sur la figure 1 en traits pointillés jusqu'au dispositif 12 d'asservissement. L'obturateur 2 préférentiel, décrit précédemment, qui comporte un élément rotatif 20, sera considéré dans toute la suite du texte, sauf mention contraire. Le dispositif 12 d'asservissement comporte généralement un moteur entraînant l'élément rotatif 20 de cet obturateur 2. Dans un mode de fonctionnement possible de la caméra, le dispositif 12 d'asservissement est piloté par les moyens 10 de traitement. Pour cela, les moyens 10 de traitement envoient un signal de synchronisation de lecture des capteurs. Ce signal de synchronisation a une fréquence F. La vitesse de rotation VR est proportionnelle à la fréquence F. L'obturateur 2 est alors synchronisé avec la lecture des capteurs 7 à 9 par les moyens 10 de traitement. Un capteur 13 de position de l'obturateur 2 détermine la position, par rapport à l'axe optique 14, d'une partie miroir de l'élément rotatif de l'obturateur 2. La caméra est conçue pour s'adapter à différents types de capteurs et en particulier à tous les types de CCD (de l'anglais « Charged Couple Device »), qu'ils soient interlignes, à transfert de trame, FIT, ou autres. II suffit de régler en fonction du type de CCD les différents paramètres de la caméra, à savoir cycle d'obturation, fréquence F, vitesse de rotation VR. A titre d'exemple, sont données ci-après les configurations de la caméra pour des capteurs CCD interlignes et des capteurs CCD à transfert de trame. Pour une synchronisation optimale de l'obturateur 2 avec la lecture des capteurs 7 à 9, l'élément rotatif peut être déphasé par rapport au signal de synchronisation, ce qui permet de régler précisément l'instant d'entrée d'une partie miroir de l'élément rotatif dans le voisinage de l'axe optique 14 en fonction du début du balayage des capteurs 7 à 9 lors de leur lecture, dans le cas par exemple de capteurs CCD dits interlignes, c'est-à-dire dont les lignes sont lues directement par balayage. Le voisinage de l'axe optique 14 est la portion de l'espace autour de l'axe optique 14, qui est éclairée par la lumière provenant du champ utile de la scène observée. Dans le cas préférentiel de capteurs dits à transfert de trame, c'est-à-dire dont tout le contenu est transféré en bloc dans une mémoire tampon avant d'être lu, habituellement CCD, le déphasage permet de faire coïncider le passage dans le voisinage de l'axe optique 14 d'une partie miroir de l'élément rotatif, passage qui correspond à un moment aveugle pour les capteurs puisque la lumière arrivant du champ utile de la scène observée est alors occultée, avec le transfert d'une trame pendant l'opération de lecture des capteurs.

La figure 2 représente schématiquement un mode de réalisation de l'obturateur 2 selon l'invention selon le plan de coupe AA de la figure 1.

L'obturateur 2 comporte un élément rotatif 20 monté sur un axe 27 de rotation perpendiculaire au plan de la figure 2. L'élément rotatif 20 comporte préférentiellement plusieurs parties miroir séparées par des parties trous qui sont des parties vides. Sur la figure 2, se trouvent deux parties miroir 21 et 22 et deux parties trou 23 et 24. Les parties miroir sont par exemple en aluminium poli.

Lors du passage des parties miroir 21 et 22 au voisinage de l'axe optique 14, voisinage défini précédemment comme étant l'espace autour de l'axe optique éclairé par la lumière du champ utile de la scène observée, la lumière issue de ce champ éclaire les parties miroir 21 et 22 au niveau de premières zones éclairées 25. De même les parties trou 23 et 24 sont éclairées, lors de leur passage au voisinage de l'axe optique 14, au niveau de deuxièmes zones éclairées 26, représentées en traits pointillés sur la figure 2. De préférence, les premières zones éclairées 25 couvrent toutes un premier secteur angulaire S1 sensiblement identique, et les deuxièmes zones éclairées 26 couvrent toutes un deuxième secteur angulaire S2 sensiblement identique. Un secteur angulaire S1 sensiblement identique signifie que ce secteur S1 est identique pour toutes les zones 25 dans le cas idéal, et que plus ce secteur S1 varie d'une zone éclairée 25 à une autre zone éclairée 25, plus la qualité de l'image de la scène observée est dégradée. De même pour le secteur angulaire S2 avec les zones éclairées 26. Le rapport entre les périodes d'éclairement et les périodes d'occultation des capteurs correspond au rapport S2/S1.

De préférence, l'obturateur 2 comporte trois modes de fonctionnement sélectionnables par l'utilisateur : un mode viseur correspondant à l'élément rotatif 20 fixe ayant toujours une partie miroir 21 (ou 22) qui coupe l'axe optique 14, un mode vidéo correspondant à l'élément rotatif 20 fixe ayant toujours une partie trou 23 (ou 24) qui coupe l'axe optique 14 et un mode mixte correspondant à l'élément rotatif 20 en rotation, les parties miroir 21 et 22 coupant l'axe optique 14 alternativement avec les parties trous 23 et 24. Le mode viseur peut être utilisé pour faire du repérage. Le mode vidéo peut être utilisé pour faire de l'enregistrement dans des conditions de faible luminosité. Le mode mixte peut être utilisé par l'utilisateur pour enregistrer tout en visionnant l'ensemble de la scène observée.

La figure 3 représente schématiquement un autre mode de réalisation de l'obturateur 2 selon l'invention selon le plan de coupe AA de la figure 1.

L'obturateur 2 comporte plusieurs éléments rotatifs comme celui de la figure 2. Les éléments rotatifs 20 et 30, avantageusement au nombre de deux comme sur la figure 3, sont superposés et montés sur le même axe de rotation 27. La partie cachée de l'élément rotatif 30 est représentée en traits pointillés. Pour des raisons de clarté, ne sont pas mentionnées ici les zones éclairées comme sur la figure 2. L'élément rotatif 20, respectivement 30, comporte des parties miroir 21 et 22, respectivement 31 et 32, des parties trou 23 et 24, respectivement 33 et 34. Les parties miroir 31 et 32 couvrent de préférence le même secteur angulaire S1 que les parties miroir 21 et 22. Un décalage angulaire relatif des deux éléments rotatifs 20 et 30 de telle sorte que les parties miroir 21 et 31 d'une part et 22 et 32 d'autre part se recouvrent partiellement permet de faire varier le rapport éclairement/obscurité pour les capteurs de la valeur S2/S1, obtenue à la figure 2, à la valeur (S2-S1)/2S1. Lorsque la valeur de ce rapport devient inférieure à zéro, ce qui peut se produire si S1>S2, cela signifie simplement que les parties trou ont disparu en étant recouvertes par les parties miroir. Le décalage angulaire est avantageusement sélectionnable par l'utilisateur.

## Revendications

1. Caméra ayant un axe optique (14) et comportant successivement:
- un obturateur (2);
- un plan focal objectif (4);
- un adaptateur (5);
- un séparateur spectral (6) de la lumière en trois composantes lumineuses;
- trois capteurs (7 à 9) à effet photoélectrique, chaque composante lumineuse étant focalisée sur un capteur différent;
- des moyens (10) électroniques de traitement des informations issues des capteurs (7 à 9);
le plan focal objectif (4) étant commun pour toutes les composantes lumineuses, et l'adaptateur (5) réalisant l'adaptation entre le plan focal objectif (4) et les plans focaux des capteurs (7 à 9);
**caractérisé en ce que** la caméra comporte aussi:
- un support objectif (1) qui est destiné à recevoir un objectif (15) et qui est situé en amont de l'obturateur (2);
- un viseur optique (3), hors champ des capteurs (7 à 9), situé hors de l'axe optique (14);
**en ce que** les chemins optiques entre l'entrée du séparateur spectral (6) et les capteurs (7 à 9) sont différents pour les trois composantes lumineuses;
et **en ce que** l'obturateur (2) est réfléchissant, laissant passer en position ouverte la lumière en direction du plan focal objectlf (4) et orientant en position fermée la lumière en direction du viseur (3).

2. Caméra vidéo selon la revendication 1, **caractérisé en ce que** la caméra comporte au moins un mode dans lequel l'obturateur (2) commute périodiquement entre les positions ouverte et fermée et **en ce que** sa période de commutation est inférieure à la durée de la persistance rétinienne.

3. Caméra selon l'une quelconque des revendications 1 à 2, **caractérisé en ce que** l'obturateur (2) comporte au moins un élément rotatif (20, 30) comportant au moins une partie miroir (21, 22, 31, 32) correspondant à sa position fermée et au moins une partie trou (23, 24, 33, 34) correspondant à sa position ouverte.

4. Caméra selon la revendication 3, **caractérisé en ce que** la caméra comporte un dispositif d'asservissement (12) de l'élément rotatif (20, 30) à une vitesse de rotation (VR) proportionnelle à la fréquence (F) d'un signal fourni par les moyens (10) de traitement au dispositif d'asservissement (12), le signal étant un signal de synchronisation de lecture des capteurs (7 à 9) par les moyens (10) de traitement, et **en ce que** la caméra comporte un capteur (13) de position de l'élément rotatif, le capteur (13) de position et le dispositif d'asservissement (12) permettant de déphaser l'élément rotatif (20, 30) par rapport au signal de synchronisation.

5. Caméra selon la revendication 4, **caractérisé en ce que** les capteurs (7 à 9) sont des capteurs à transfert de trame.

6. Caméra selon l'une quelconque des revendications 3 à 5, **caractérisé en ce que** l'obturateur (2) comporte trois modes sélectionnables par l'utilisateur: un mode viseur correspondant à un élément rotatif (20, 30) fixe ayant toujours une partie miroir (21, 22, 31, 32) qui coupe l'axe optique (14); un mode vidéo correspondant à un élément rotatif (20, 30) fixe ayant toujours une partie trou (31, 32, 33, 34) qui coupe l'axe optique (14); un mode mixte correspondant à un élément rotatif (20, 30) en rotation.

7. Caméra selon l'une quelconque des revendications 3 à 6, **caractérisé en ce que** l'élément rotatif (20, 30) comporte au moins deux parties miroir (21 et 22, 31 et 32) et au moins deux parties trous (23 et 24, 33 et 34), **en ce qu'**au voisinage de l'axe optique (14), les parties miroir (21 et 22, 31 et 32) couvrent toutes un premier secteur angulaire (S1) sensiblement identique et les parties trous (23 et 24, 33 et 34) couvrent toutes un deuxième secteur angulaire (S2) sensiblement identique.

8. Caméra selon la revendication 7, **caractérisé en ce que** l'obturateur (2) comporte au moins deux éléments rotatifs (20 et 30) ayant le même axe (27) de rotation, étant superposés et pouvant être décalés d'un décalage angulaire tel que les parties miroir (21 et 31, 22 et 32) d'éléments rotatifs différents (20 et 30) se recouvrent au moins partiellement.

9. Caméra selon la revendication 8, **caractérisé en ce que** le décalage est sélectionnable par l'utilisateur.

10. Caméra selon l'une quelconque des revendications 1 à 9, **caractérisé en ce que** la caméra comporte un écran (11) de visualisation de la synthèse des différentes composantes lumineuses après passage dans les moyens (10) de traitement.

## Patentansprüche

1. Kamera, die eine optische Achse (14) besitzt und nacheinander umfaßt:
- einen Verschluß (2);
- eine Objektiv-Brennebene (4);
- einen Adapter (5);
- einen Spektraltrenner (6) zum Trennen des Lichts in drei Lichtkomponenten;
- drei Sensoren (7 bis 9) mit photoelektrischem Effekt, wobei jede Lichtkomponente auf einen anderen Sensor fokussiert ist;
- elektronische Mittel (10) für die Verarbeitung von von den Sensoren (7 bis 9) ausgegebenen Informationen;
wobei die Objektiv-Brennebene (4) allen Lichtkomponenten gemeinsam ist und der Adapter (5) die Anpassungen zwischen der Objektiv-Brennebene (4) und den Brennebenen der Sensoren (7 bis 9) vornimmt;
**dadurch gekennzeichnet, daß** die Kamera außerdem umfaßt:
- einen Objektivträger (1), der dazu bestimmt ist, ein Objektiv (15) aufzunehmen, und der sich vor dem Verschluß (2) befindet;
- ein optisches Visier (3) außerhalb des Feldes der Sensoren (7 bis 9), das sich nicht auf der optischen Achse (14) befindet;
daß die optischen Wege zwischen dem Eingang des Spektraltrenners (6) und den Sensoren (7 bis 9) für die drei Lichtkomponenten verschieden sind;
und daß der Verschluß (2) reflektierend ist und in der offenen Stellung das Licht in Richtung der Objektiv-Brennebene (4) durchläßt und in der geschlossenen Stellung das Licht zum Visier (3) lenkt.

2. Videokamera nach Anspruch 1, **dadurch gekennzeichnet, daß** die Kamera wenigstens eine Betriebsart aufweist, in der der Verschluß (2) periodisch zwischen der offenen Stellung und der geschlossenen Stellung umschaltet und daß seine Umschaltperiode kürzer als die Dauer der Netzhautpersistenz ist.

3. Kamera nach einem der Ansprüche 1 bis 2, **dadurch gekennzeichnet, daß** der Verschluß (2) wenigstens ein drehbares Element (20, 30) umfaßt, das wenigstens einen Spiegelabschnitt (21, 22, 31, 32), der seiner geschlossenen Stellung entspricht, und wenigstens einen Lochabschnitt (23, 24, 33, 34), der seiner offenen Stellung entspricht, enthält.

4. Kamera nach Anspruch 3, **dadurch gekennzeichnet, daß** die Kamera eine Vorrichtung (12) zum Regeln des drehbaren Elements (20, 30) auf eine Drehgeschwindigkeit (VR), die zur Frequenz (F) eines von den Verarbeitungsmitteln (10) an die Regelungsvorrichtung (12) gelieferten Signals proportional ist, wobei das Signal ein Signal zum Synchronisieren des Lesens der Sensoren (7 bis 9) durch die Verarbeitungsmittel (10) ist, und daß die Kamera einen Sensor (13) für die Position des drehbaren Elements enthält, wobei der Positionssensor (13) und die Regelungsvorrichtung (12) eine Phasenverschiebung des drehbaren Elements (20, 30) in bezug auf das Synchronisationssignal ermöglichen.

5. Kamera nach Anspruch 4, **dadurch gekennzeichnet, daß** die Sensoren (7 bis 9) Teilbildübertragungssensoren sind.

6. Kamera nach einem der Ansprüche 3 bis 5, **dadurch gekennzeichnet, daß** der Verschluß (2) drei vom Anwender wählbare Betriebsarten umfaßt: eine Visierbetriebsart, die einem festen drehbaren Element (20, 30) entspricht, das stets einen Lochabschnitt (31, 32, 33, 34) besitzt, der die optische Achse (14) schneidet; eine Videobetriebsart, die einem festen drehbaren Element (20, 30) entspricht, das stets einen Lochabschnitt (31, 32, 33, 34) besitzt, der die optische Achse (14) schneidet; eine Mischbetriebsart, die einem rotierenden drehbaren Element (20, 30) entspricht.

7. Kamera nach einem der Ansprüche 3 bis 6, **dadurch gekennzeichnet, daß** das drehbare Element (20, 30) wenigstens zwei Spiegelabschnitte (21 und 22, 31 und 32) und wenigstens zwei Lochabschnitte (23 und 24, 33 und 34) enthält, daß in der Umgebung der optischen Achse (14) die Spiegelabschnitte (21 und 22, 31 und 32) alle im wesentlichen denselben ersten Winkelsektor (S1) abdecken und die Lochabschnitte (23 und 24, 33 und 34) alle im wesentlichen denselben zweiten Winkelsektor (S2) abdecken.

8. Kamera nach Anspruch 7, **dadurch gekennzeichnet, daß** der Verschluß (2) wenigstens zwei drehbare Elemente (20, 30) umfaßt, die dieselbe Drehachse (27) besitzen, übereinander angeordnet sind und um eine Winkelverschiebung verschoben werden können, derart, daß sich die Spiegelabschnitte (21 und 22, 31 und 32) verschiedener drehbarer Elemente (20 und 30) wenigstens teilweise abdecken.

9. Kamera nach Anspruch 8, **dadurch gekennzeichnet, daß** die Verschiebung vorn Anwender wählbar ist.

10. Kamera nach einem der Ansprüche 1 bis 9, **dadurch gekennzeichnet, daß** die Kamera einen Schirm (11) für die Anzeige der Synthese der verschiedenen Lichtkomponenten nach dem Durchgang durch die Verarbeitungsmittel (10) umfaßt.

## Claims

1. Camera having an optical axis (14) and comprising successively:
- a shutter (2);
- an objective focal plane (4);
- an adapter (5);
- a spectral splitter (6) of light into three light components;
- three photoelectric-effect sensors (7 to 9), each light component being focused on a different sensor;
- electronic means (10) for the processing of information coming from the sensors (7 to 9);
the objective focal plane (4) being common to all the light components, and the adapter (5) matching the objective focal plane (4) with the focal planes of the sensors (7 to 9);
**characterised in that**
the camera also comprises:
- an objective support (1) designed to receive an objective (15) and located upstream of the shutter (2);
- an optical viewfinder (3), outside the field of the sensors (7 to 9) located off the optical axis (14);
that the optical paths between the input of the spectral splitter (6) and the sensors (7 to 9) are different for the three light components;
and that the shutter (2) is reflective, in its open position allowing light to pass through towards the objective focal plane (4) and in its closed position directing the light towards the viewfinder (3).

2. Video camera according to claim 1, **characterised in that** the camera has at least one mode in which the shutter (2) periodically switches between the open and the closed positions and **in that** its switching period is smaller than the duration of the retinal persistence.

3. Camera according to either of claims 1 and 2, **characterised in that** the shutter (2) has at least one rotative element (20, 30) comprising at least one mirror part (21, 22, 31, 32) corresponding to its closed position and at least one aperture part (23, 24, 33, 34) corresponding to its open position.

4. Camera according to claim 3, **characterised in that** the camera has an automatic control device (12) for the rotative element (20, 30) at a speed of rotation (VR) proportional to the frequency (F) of a signal supplied by the processing means (10) to the automatic control device (12), the signal being a synchronisation signal for the reading of the sensors (7 to 9) by the processing means (10), and **in that** the camera incorporates a sensor (13) for sensing the position of the rotative element, the position sensor (13) and the automatic control device (12) enabling the rotative element (20, 30) to be phase-shifted with respect to the synchronisation signal.

5. Camera according to claim 4, **characterised in that** the sensors (7 to 9) are frame transfer sensors.

6. Camera according to any of claims 3 to 5, **characterised in that** the shutter (2) has three modes which can be selected by the users: a viewfinder mode corresponding to a fixed rotative element (20, 30) which always has a mirror part (21, 22, 31, 32) which intersects the optical axis (14); a video mode corresponding to a fixed rotative element (20, 30) which always has an aperture part (31, 32, 33, 34) which intersects the optical axis (14); and a combined mode corresponding to a rotative element (20, 30) in rotation.

7. Camera according to any of claims 3 to 6, **characterised in that** the rotative element (20, 30) comprises at least two mirror parts (21 and 22, 31 and 32) and at least two aperture parts (23 and 24, 33 and 34), and **in that**, in the vicinity of the optical axis (14), the mirror parts (21 and 22, 31 and 32) all cover a first angular sector (S1) that is substantially identical and the aperture parts (23 and 24, 33 and 34) all cover a second angular sector (S2) that is substantially identical.

8. Camera according to claim 7, **characterised in that** the shutter (2) comprises at least two rotative elements (20 and 30) having the same axis of rotation (27), which are superimposed and can be offset by an angular offset such that the mirror parts (21 and 31, 22 and 32) of different rotative elements (20 and 30) overlap at least partially.

9. Camera according to claim 8, **characterised in that** the offset can be selected by the user.

10. Camera according to any of claims 1 to 9, **characterised in that** the camera has a screen (11) for viewing the synthesis of the different light components after they have passed into the processing means (10).
